(19) Europäisches Patentamt
European Patent Office
Office européen des brevets

(11) Publication number: **0 510 206 A1**

(12) # EUROPEAN PATENT APPLICATION published in accordance with Art. 158(3) EPC

(21) Application number: **91918938.1**

(22) Date of filing: **31.10.91**

(86) International application number: **PCT/JP91/01490**

(87) International publication number: **WO 92/07887 (14.05.92 92/11)**

(51) Int. Cl.[5]: **C08F 255/02**, C08L 51/06, C08L 51/08, C08G 81/02

(30) Priority: **02.11.90 JP 297581/90**
**15.07.91 JP 173610/91**

(43) Date of publication of application: **28.10.92 Bulletin 92/44**

(84) Designated Contracting States: **AT BE CH DE DK ES FR GB GR IT LI LU NL SE**

(71) Applicant: **SUMITOMO CHEMICAL COMPANY LIMITED**
**5-33, Kitahama 4-chome, Chuo-ku**
**Osaka-shi, Osaka 541(JP)**

(72) Inventor: **FURUTA, Motonobu, 321-12,**
**Nagasaku-cho**
**Chiba-shi**
**Chiba 281(JP)**
Inventor: **ABE, Hiroomi, 251-75,**
**Naganuma-cho**
**Chiba-shi**
**Chiba 281(JP)**
Inventor: **FUJII, Takeshi, 2848-19, Kubota**
**Sodegaura-shi**
**Chiba 299-02(JP)**
Inventor: **YAMAMOTO, Masashi, 1-9, Yushudai**
**Nishi**
**Ichihara-shi**
**Chiba 299-01(JP)**

(74) Representative: **Vossius & Partner**
**Siebertstrasse 4 P.O. Box 86 07 67**
**W-8000 München 86(DE)**

(54) **MODIFIED PROPYLENE POLYMER AND THERMOPLASTIC RESIN COMPOSITION COMPRISING MODIFIED PROPYLENE POLYMER AND POLYPHENYLENE ETHER.**

(57) A modified propylene polymer having an average number of graft chains of 1 to 10 per molecule of propylene polymer, a weight-average degree of polymerization of the graft chain of 1 to 100 and a weight-average molecular weight of 1,000 to 500,000, said modified polymer being produced by the graft copolymerization of a propylene polymer with a specified amount of a combination of specified monomers selected among styrenic monomers, amine monomers and aminated styrenic monomers; and a thermoplastic resin composition comprising said modified polymer and a polyphenylene ether modified with a compound having a functional group which can react with an amino group. The modified propylene polymer is excellent in coatability, antistatic property and mechanical properties and is useful as a molding and an alloying agent for polymers, while the thermoplastic resin composition is excellent in strength and heat resistance.

EP 0 510 206 A1

Fig.1 IR Spectrum of propylene ploymers
(Solid line: modified polypropylene
Broken line: homopolypropylene)

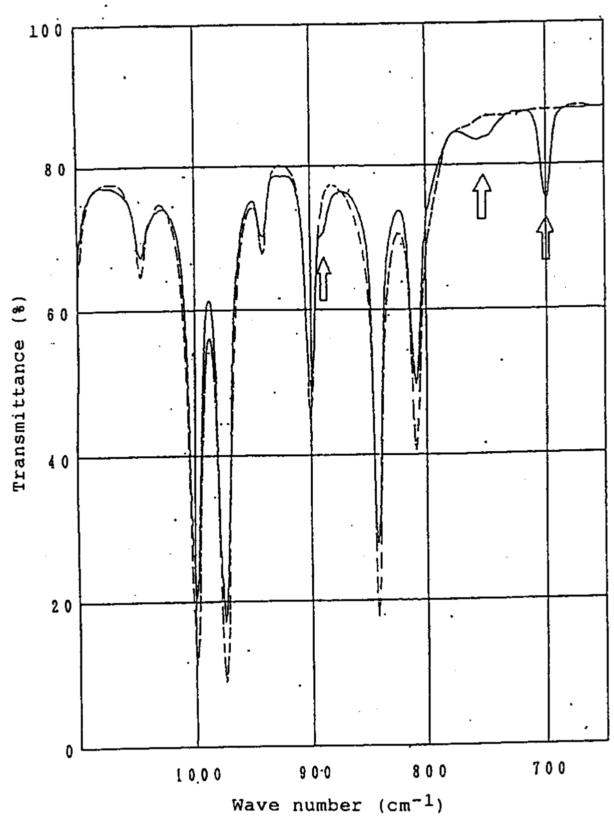

## FIELD OF THE INVENTION

The present invention relates to a novel modified propylene polymer which is used, for example, to produce a molded article by injection molding and extrusion molding.

Further, the present invention relates to a thermoplastic resin composition comprising a modified propylene polymer as one of components. This thermoplastic resin composition is used to produce a molded article by injection molding and extrusion molding.

## Description of the Prior Art

Since a propylene polymer is excellent in moldability, toughness, water resistance and chemical resistance, has a low specific gravity and is cheap, it is widely used as a raw material of various molded articles, a film or a sheet.

However, the propylene polymer is insufficient in heat resistance, stiffness, impact resistance, coating properties, antistatic property or adhesion, or should be improved in such properties. This prevents new application of the propylene polymer. In particular, improvement of the coating properties, the antistatic property and mechanical properties is highly desired.

A polyphenylene ether has excellent properties such as heat resistance, hot water resistance, dimensional stability, and mechanical and electrical properties, but it has some drawbacks such as high melt viscosity, poor moldability, low chemical resistance and low impact resistance.

It may be expected that a wide variety of new applications could be found if the polyphenylene ether and the propylene polymer were compounded to give a resin composition having the good properties of the both polymers and improved moldability and impact resistance.

However, practically, the polyphenylene ether and the propylene polymer have low compatibility with each other even if they are compounded, so that, in a molded article produced by the injection molding, the polyphenylene ether and the propylene polymer are phase separated, and the article has extremely poor appearance and deteriorated mechanical properties. In the market, it is still highly desired to provide a resin composition having high impact resistance and good weather resistance while maintaining excellent heat resistance of the polyphenylene ether.

To improve the compatibility between the polyphenylene ether and the propylene polymer, for example, EP-A-329 423 discloses the use of a propylene polymer to which a styrene monomer is grafted in combination with the polyphenylene ether.

EP-A-329 423 discloses that a composition having good heat resistance and mechanical properties is obtained by compounding the propylene polymer or the rubber to which styrene or a mixture of styrene and a monomer copolymerizable with styrene is grafted in the polyphenylene ether. Japanese Patent Kokai Publication No. 173137/1990 discloses a resin composition comprising a polyolefin having an amino group and a polyphenylene ether having a polar group.

When the above resin composition is used, a molded article is not necessarily satisfactory in impact resistance, heat resistance or moldability, or is insufficient in elongation, tensile modulus or chemical resistance. Further, the injection molded article has insufficient mechanical properties at a welded part. Therefore, in some applications, the use of such composition is difficult. In addition, the composition is expensive. Therefore, the market requires a cheap composition having improved properties.

## DESCRIPTION OF THE INVENTION

An object of the present invention is to provide a modified propylene polymer which is excellent in coating properties, antistatic property and mechanical properties, and a thermoplastic resin composition which comprises said modified propylene polymer and a polyphenylene ether and is excellent in heat resistance, melt flowability, processability, chemical resistance, impact resistance, appearance and gloss.

## BRIEF DESCRIPTION OF THE DRAWINGS

Fig. 1 shows IR spectra of a modified propylene polymer of Example 1 according to the present invention (solid line) and a raw material propylene polymer (dotted line),
Fig. 2 shows an IR spectrum of polystyrene,
Fig. 3 shows an IR spectrum of styrene, and
Fig. 4 shows an IR spectrum of diallylamine.

Accordingly, the present invention relates to a modified propylene polymer which comprises a

propylene polymer to which at least one monomer or monomer mixture selected from the following monomers and monomer mixtures (a) to (d) is grafted in an amount of 1 to 200 parts by weight per 100 parts by weight of said propylene polymer, and has the average graft chain number of 1 to 10 per one molecule of the propylene polymer, a weight average polymerization degree of the graft chains of 1 to 100 and an average molecular weight of 1000 to 500,000, and to a thermoplastic resin composition comprising, as one of components, said modified propylene polymer:

(a) an amino group-containing styrene monomer,

(b) a styrene monomer and an amino group-containing monomer in a weight ratio of 0.01:1 to 100:1,

(c) an amino group-containing styrene monomer and a styrene monomer in a weight ratio of 0.01:1 to 100:1,, and

(d) an amino group-containing styrene monomer and an amino group-containing monomer in a weight ratio of 0.01:1 to 100:1,

provided that said styrene monomer and said amino group-containing monomer are not an amino group-containing styrene monomer.

When the amount of the monomer(s) forming the graft chains of the modified propylene polymer exceeds 200 parts by weight, or when the weight average polymerization degree of the graft chains exceeds 100, the molding processability of the modified propylene polymer deteriorates unpreferably.

When the weight average molecular weight of the modified propylene polymer is less than 1000, the mechanical properties of the modified propylene polymer are insufficient. When the average molecular weight exceeds 500,000, the molding processability of the modified propylene polymer deteriorates unpreferably.

The propylene polymer which is a raw material of the modified propylene polymer of the present invention means a homopolymer of propylene or a random or block copolymer of a major amount of propylene and other $\alpha$-olefin having 2 to 18 carbon atoms.

Specific examples of the propylene copolymer are ethylene-propylene copolymer, propylene-1-butene copolymer, propylene-1-hexene copolymer, propylene-4-methyl-1-pentene copolymer, propylene-1-octene copolymer and the like.

If necessary, to the propylene polymer, ethylene-$\alpha$-olefin copolymer and/or a styrene-modified product of such copolymer may be added. As the ethylene-$\alpha$-olefin copolymer, one having a density of 0.82 to 0.92 g/cm$^3$ is preferably used.

As the propylene polymer, a highly crystalline propylene polymer may be used in necessary. The highly crystalline propylene polymer intends to mean a propylene polymer in which an isotactic pentad ratio of a part insoluble in boiling heptane in a homopolymer or a homopolymer segment which is a first segment polymerized in the first step of the block copolymer is 0.970 or larger, as described in Japanese Patent Kokai Publication No. 247457/1989.

In a field where high stiffness is required, it is preferable to add a known nucleating agent to the propylene polymer.

Further, it is known that a polymer of a vinylcycloalkane having 6 or more carbon atoms effectively functions as a nucleating agent.

That is, a composition which is prepared by blending the polymer of the vinylcycloalkane having 6 or more carbon atoms as disclosed in Japanese Patent Kokai Publication No. 234462/1989 in the propylene polymer and contains 0.05 to 10,000 wt.ppm of the vinylcycloalkane units in the composition is preferred since it has high crystallinity.

By blending the vinylcycloalkane polymer in the highly crystalline propylene polymer, the propylene polymer having high stiffness is obtained.

The propylene polymers (propylene homopolymer and propylene copolymers) may be used independently or as a mixture of two or more of them.

In the modified propylene polymer according to the present invention, a monomer to be grafted on the propylene polymer is at least one monomer or monomer mixture selected from the following monomers or monomer mixtures (a) to (d):

(a) an amino group-containing styrene monomer,

(b) a styrene monomer and an amino group-containing monomer in a weight ratio of 0.01:1 to 100:1,

(c) an amino group-containing styrene monomer and a styrene monomer in a weight ratio of 0.01:1 to 100:1, and

(d) an amino group-containing styrene monomer and an amino group-containing monomer in a weight ratio of 0.01:1 to 100:1,

provided that the above styrene monomer and the above amino group-containing monomer are not an amino group-containing styrene monomer.

Herein, the amino group-containing styrene monomer means a styrene monomer which has an amino group and is graft copolymerizable with the propylene polymer. As such monomer, a styrene monomer having a primary or secondary amino group is preferably used. In particular, aminostyrene or aminomethylstyrene is preferred. Each compound includes its isomers. The amino group-containing styrene monomer may be used independently or as a mixture of two or more of them.

The styrene monomer except the above amino group-containing styrene is represented by the formula:

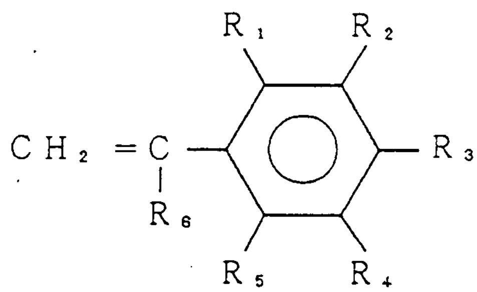

wherein $R_1$, $R_2$, $R_3$, $R_4$ and $R_5$ are the same or different and each a hydrogen atom, a halogen atom, a hydrocarbon group, a substituted hydrocarbon group, a hydrocarbonoxy group or a substituted hydrocarbonoxy group, and $R_6$ is a hydrogen atom or a lower alkyl group having 1 to 4 carbon atoms.

Specific examples of $R_1$, $R_2$, $R_3$, $R_4$ and $R_5$ in the above formula are a hydrogen atom; halogen atoms such as a chlorine atom, a bromine atom and an iodine atom; hydrocarbon groups such as a methyl group, an ethyl group, a propyl group, a vinyl group, an allyl group, a benzyl group and a methylbenzyl group; substituted hydrocarbon groups such as a chloromethyl group and a bromomethyl group; and substituted or unsubstituted hydrocarbonoxy groups such as a methoxy group, an ethoxy group, a phenoxy group and a monochloromethoxy group.

Specific examples of $R_6$ are a hydrogen atom and lower alkyl groups such as a methyl group and an ethyl group.

Specific examples of the styrene monomer are styrene, 2,4-dichlorostyrene, p-methoxystyrene, p-methylstyrene, p-phenylstyrene, p-divinylbenzene, p-(chloromethoxy)-styrene, $\alpha$-methylstyrene, o-methyl--methylstyrene, m-methyl-$\alpha$-methylstyrene, p-methyl-$\alpha$-methylstyrene, p-methoxy-$\alpha$-methylstyrene and the like. They may be used independently or as a mixture of two or more of them. Among them, styrene is preferably used.

Next, the amino group-containing monomer means a monomer having an amino group which can be grafted on the propylene polymer except the amino group-containing styrene monomer. As this monomer, a monomer having a primary or secondary amino group and a carbon-carbon double or triple bond in a molecule is preferably used. Preferred examples are allylamine, diallylamine, vinylimidazole, allylaniline, acrylamide, methacrylamide, N-phenylmethacrylamide and the like. They may be used independently or as a mixture of two or more of them.

In addition to the above monomer or monomer mixture (a) to (d), other monomer which is copolymerizable with the styrene monomer may be used as a copolymer component to prepare the modified propylene polymer according the present invention.

Specific examples of the monomer copolymerizable with the styrene monomer are acrylonitrile, methacrylonitrile, fumaric acid, maleic acid, vinyl ketone, maleic anhydride, acrylic acid, methacrylic acid, vinylidene chloride, maleates, methyl methacrylate, ethyl methacrylate, propyl methacrylate, glycidyl acrylate, glycidyl methacrylate, butyl methacrylate, methyl acrylate, 2-hydroxyethyl methacrylate, ethyl acrylate, propyl acrylate, butyl acrylate, vinyl chloride, vinyl acetate, divinylbenzene, ethylene oxide, isobutene, alkyl vinyl ether, anethol, indene, cumarone, benzofuran, 1,2-dihydronaphthalene, acenaphthylene, isoprene, chloroprene, trioxane, 1,3-dioxolane, propylene oxide, $\beta$-propiolactone, vinylbiphenyl, 1,1-diphenylethylene, 1-vinylnaphthalene, 2-vinylnaphthalene, 2,3-dimethylbutadiene, ethylene, propylene allyltrimethylsilane, 3-butenyltrimethylsilane, vinylcarbazole, fumarnitrile and the like. Derivatives of these monomers may be used. They are used independently or as a mixture of two or more of them.

As a process for preparing the modified propylene polymer, any of conventional processes such as suspension graft polymerization, emulsion graft polymerization, solution graft polymerization or melt graft polymerization may be employed. Among them, the suspension graft polymerization and the melt graft polymerization are preferred.

More concretely, is exemplified a suspension graft polymerization comprising charging, in an aqueous phase, the propylene polymer, at least one monomer or monomer combination selected from the above groups (a) to (d), a dispersant, a radical initiator and the like and heating the mixture while stirring to graft polymerize at least one monomer or monomer combination selected from the above groups (a) to (d) on the propylene polymer.

In a preferred suspension graft copolymerization, in a dispersion containing water, the dispersant and the propylene polymer particles, at least one monomer or monomer combination selected from the above groups (a) to (d) and the radical initiator such as an organic peroxide are introduced and the dispersion is heated up to a temperature of 100 to 130 ° C over 20 to 80 minutes and kept at that temperature for 30 to 120 minutes.

In such graft polymerization, preferably, 1 to 200 parts by weight of at least one monomer or monomer combination selected from the above groups (a) to (d) is used per 100 parts by weight of the propylene polymer, and 50 to 1000 parts by weight of water, 0.05 to 10 parts by weight of the dispersant and 0.01 to 10 parts by weight of the radical initiator are used per 100 parts by weight of the total weight of the propylene polymer and the monomer(s).

As the dispersant, any of known dispersants may be used. Preferably, 50 % by weight or more of the dispersants comprises at least one of the compounds of the formula:

$$\begin{array}{l} H(C_2H_4O)_a(C_3H_6O)_b \diagdown \qquad \diagup (C_3H_6O)_e(C_2H_4O)_fH \\ \qquad\qquad\qquad\qquad\qquad N-R-N \\ H(C_2H_4O)_c(C_3H_6O)_d \diagup \qquad \diagdown (C_3H_6O)_g(C_2H_4O)_hH \end{array}$$

wherein a to h are each a number of 5 to 1000, and R is a hydrocarbon group having 1 to 10 carbon atoms, and

$HO(C_2H_4O)i(C_3H_6O)j(C_2H_4O)_kH$

wherein i, j and k are each a number of 10 to 1000.

A preferred melt graft polymerization comprises compounding the propylene polymer, at least one monomer or monomer combination selected from the above groups (a) to (d) and the radical initiator and melt kneading them in a temperature range between 180 ° C and 280 ° C.

In the melt graft polymerisation, preferably 1 to 50 parts by weight of at least one monomer or monomer combination selected from the above groups (a) to (d) is compounded per 100 parts by weight of the propylene polymer.

When the kneading temperature is lower than 180 ° C, it is difficult to uniformly knead the components. When this temperature exceeds 280 ° C, the propylene polymer is unpreferably decomposed during kneading.

There is no limitation on a kind of a kneading machine and any of conventional ones may be used. For melt kneading, a conventionally used single- or twin-screw extruder or a kneader can be used. In particular, a twin-screw kneader is preferred.

Herein, the modified propylene polymer intends to mean a propylene polymer having, in one molecule, a graft chain formed from at least one monomer or monomer combination selected from the above groups (a) to (d). Practically, after the graft polymerization, the modified propylene polymer may contain unmodified propyleme polymer molecules.

In the practical use, the modified polymer may be used as such, or the unmodified propylene polymer molecules may be removed using a solvent.

Alternatively, a copolymer of the styrene monomer and glycidyl acrylate is prepared by anion polymerization. Then, this copolymer and the propylene polymer are melt kneaded together with the following radical initiator and the amino group-containing styrene monomer to obtain a modified propylene polymer. Similarly, a copolymer of the styrene monomer and acrylonitrile is prepared, and then this copolymer and the propylene polymer are melt kneaded together with the amino group-containing monomer and the following radical initiator to obtain a modified propylene polymer.

A kind of the radical initiator to be used in the preparation of the modified propylene polymer is not critical. For example, those disclosed in Japanese Patent Kokai Publication No. 160856/1990 may be used.

To the modified propylene polymer, if necessary, various additives such as a flame retardant, an antioxidant, a heat stabilizer, a light stabilizer, an antistatic agent, an inorganic or organic colorant, a rust

preventive, a crosslinking agent, a foaming agent, a lubricant, a plasticizer, a fluorescent agent, a surface smoothing agent, a surface gloss improver and the like may be added.

The flame retardant is explained further in detail. The flame retardant useful in the present invention includes a group of the compounds well known to those skilled in the art.

In general, among the flame retardants, is used a compound comprising an element which can impart flame retardancy to the composition such as bromine, chlorine, antimony, phosphorus and nitrogen as disclosed in Japanese Patent Kokai Publication No. 160856/1990. For example, a halogen-containing organic compound, antimony oxide, a mixture of antimony oxide and the halogen-containing compound, a mixture of antimony oxide and a phosphorus compound, a mixture of phosphorus and the phosphorus compound, a mixture of the phosphorus compound and a compound having a phosphorus-nitrogen bond, and a mixture containing two or more of such compounds are used.

Next, the present invention relates to a thermoplastic resin comprising the above modified propylene polymer and a modified polyphenylene ether.

Accordingly, the present invention provides a thermoplastic resin comprising (A) a polyphenylene ether which is modified with a compound having a functional group reactive with an amino group in a molecule and (B) a modified propylene polymer which comprises a propylene polymer to which at least one monomer or monomer mixture selected from the following monomers and monomer mixtures (a) to (d) is grafted in an amount of 1 to 200 parts by weight per 100 parts by weight of said propylene polymer, and has the average graft chain number of 1 to 10 per one molecule of the propylene polymer, a weight average polymerization degree of the graft chains of 1 to 100 and an average molecular weight of 1000 to 500,000, and to a thermoplastic resin composition comprising, as one of components, said modified propylene polymer:

(a) an amino group-containing styrene monomer,

(b) a styrene monomer and an amino group-containing monomer in a weight ratio of 0.01:1 to 100:1,

(c) an amino group-containing styrene monomer and a styrene monomer in a weight ratio of 0.01:1 to 100:1, and

(d) an amino group-containing styrene monomer and an amino group-containing monomer in a weight ratio of 0.01:1 to 100:1,

provided that said styrene monomer and said amino group-containing monomer are not an amino group-containing styrene monomer.

A polyphenylene ether which is a starting material of the modified polyphenylene ether (A) is a polymer which is obtained by oxidative polymerizing a phenol compound of the general formula:

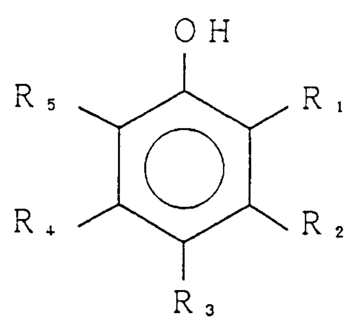

wherein $R_1$, $R_2$, $R_3$, $R_4$ and $R_5$ are each a hydrogen atom, a halogen atom, a hydrocarbon group or a substituted hydrocarbon group, provided that at least one of them is a hydrogen atom, with oxygen or an oxygen-containing gas in the presence of an oxidative coupling catalyst.

Specific examples of $R_1$, $R_2$, $R_3$, $R_4$ and $R_5$ in the above general formula are a hydrogen atom, a chlorine atom, a bromine atom, a fluorine atom, an iodine atom, a methyl group, an ethyl group, a n- or isopropanol, a pri.-, sec.-or tert.-butyl group, a chloroethyl group, a hydroxyethyl group, a phenylethyl group, a benzyl group, a hydroxymethyl group, a carboxymethyl group, a methoxycarbonylethyl group, a cyanoethyl group, a phenyl group, a chlorophenyl group, a methylphenyl group, a dimethylphenyl group, an ethylphenyl group, an allyl group and the like.

Specific examples of the phenol compound of the above general formula are phenol, o-, m- and p-cresol, 2,6-, 2,5-, 2,4- and 3,5-dimethylphenol, 2-methyl-6-phenylphenol, 2,6-diphenylphenol, 2,6-diethylphenol, 2-methyl-6-ethylphenol, 2,3,5-, 2,3,6- and 2,4,6-trimethylphenol, 3-methyl-6-tert.-butylphenol, thymol, 2-methyl-6-allylphenol and the like. In addition, a copolymer of the phenol compound of the above general

formula and a polyhydroxy aromatic compound such as bisphenol A, tetrabromobisphenol A, resorcinol, hydroquinone or a novolak resin may be used.

Among them, homopolymers of 2,6-dimethylphenol and 2,6-diphenylphenol and a copolymer of a major amount of 2,6-xylenol and a minor amount of 3-methyl-6-tert.-butylphenol or 2,3,6-trimethylphenol are preferred.

The oxidative coupling catalyst used in the oxidative polymerization of the phenol compound is not critical and any catalyst which can catalyze the polymerization can be used. Typical examples of the catalyst are cuprous chloride/triethylamine and the catalysts disclosed in Japanese Patent Kokai Publication No. 160856/1990.

It is known that polyphenylene ethers obtained by oxidative polymerization at a temperature higher than 40°C (high temperature polymerization) and a temperature not higher then 40°C (low temperature polymerization) have different properties. In the present invention, either of the high temperature polymerization product and the low temperature polymerization produce can be used.

As the polyphenylene ether which is modified with the compound having the functional group reactive with the amino group in a molecule (A) according to the present invention, is exemplified a polymer prepared by reacting one or more compounds selected from the following groups (a) to (c) with the polyphenylene ether:

(a) A compound having, in a molecule, at least one group selected from (i) a carbon-carbon double bond and a carbon-carbon triple bond and at least one group selected from (ii) a carboxyl group, an acid anhydride group, an acid amide group, an imide group, an epoxy group, a carboxylate group, an isocyanate group, a methylol group, a group having an oxazoline ring and a hydroxyl group.

Specific examples are maleic anhydride, maleic acid, fumaric acid, maleimide, maleic hydrazide, a reaction product of maleic anhydride and a diamine such as a compound having a structure of the formula:

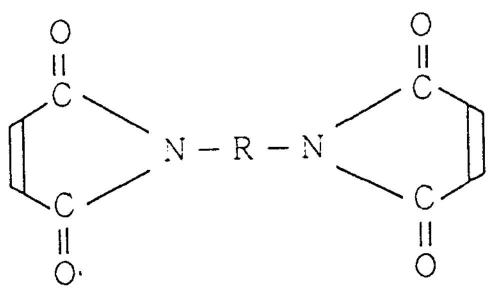

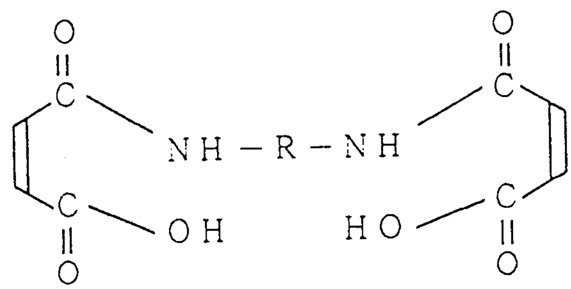

wherein R is an aliphatic or aromatic group, methylnadic anhydride, dichloromaleic anhydride, maleic acid amide, natural oils such as soy bean oil, tung oil, castor oil, linseed oil, hemp-seed oil, cotton seed oil, sesame oil, rape seed oil, peanut oil, tsubaki oil, olive oil, coconut oil and sardine oil; epoxidized natural oils such as expoxidized soy bean oil; unsaturated carboxylic acids such as acrylic acid, butenoic acid, crotonic acid, vinylacetic acid, methacrylic acid, pentenoic acid, angelic acid, tiglic acid, 2-pentenoic acid, 3-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α-ethylcrotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosenoic acid, docosenoic acid, erucic acid, mycolipenic acid, 2,4-pentadienoic acid, 2,4-hexadienoic acid, diallylacetic acid, geranium acid, 2,4-decadienoic acid, 2,4-dodecadienoic acid, 9,12-hexadecadienoic acid, 9,12-octadecadienoic acid, hexadecatrienoic acid, linoleic acid, linolenic acid, octadecatrienoic acid, eicosadienoic acid, eicosatrienoic acid, eicosatetraenoic acid, ricinoleic acid, eleostearic acid, oleic acid, eicosapentaenoic acid, erucic acid, docosadienoic acid, docosatrienoic acid, docosatetraenoic acid, docosapentaenoic acid, tetracosenoic acid, hexacosenoic acid, hexacodienoic acid, octacosenoic acid and tetracontenoic acid or their esters, acid amides, anhydrides; unsaturated alcohols such as allyl alcohol, crotyl alcohol, methyvinylcarbinol, allylcarbinol, methylpropnenylcarbinol, 4-penten-1-ol, 10-undecen-1-ol, propargyl alcohol, 1,4-pentadien-3-ol, 1,4-hexadien-3-ol, 3,5-hexadien-2-ol, 2,4-hexadien-1-ol, 3-butene-1,2-diol, 2,5-dimethyl-3-hexene-2,5-diol, 1,5-hexadiene-3,4-diol and 2,6-octadiene-4,5-diol or unsaturated amines consisting of these unsaturated alcohols in which an OH group is substituted with a $NH_2$ group; glycidyl acrylate, glycidyl methacrylate, allyl glycidyl ether, and the like.

Among them, maleic anhydride, fumaric acid, itaconic acid, hymic anhydride, glycidyl acrylate, glycidyl methacrylate and allyl glycidyl ether are preferred.

It is possible to use a compound having at least two functional groups from the group (i) and at least two functional groups which may be the same or different from the group (ii). Also, it is possible to use two or more compounds.

(b) a saturated aliphatic polycarboxylic acid or its derivative of the formula:

$$(R^1O)_mR(COOR^2)_n(CONR^3R^4)_s$$

wherein

R is an alkyl group having 2 to 20 carbon atoms, preferably 2 to 10 carbon atoms,

$R^1$ is a hydrogen atom, an alkyl group, an acyl group or a carbonyldioxy group having 1 to 10 carbon atoms, preferably 1 to 6 carbon atoms, more preferably 1 to 4 carbon atoms, in particular a hydrogen atom, or an aryl group having 6 to 20 carbon atoms,

$R^2$ is a hydrogen atom or an alkyl group having 1 to 20 carbon atoms, preferably 1 to 10 carbon atoms or an aryl group having 6 to 20 carbon atoms,

$R^3$ and $R^4$ are each a hydrogen atom or an alkyl group having 1 to 10 carbon atoms, preferably 1 to 6 carbon atoms, more preferably 1 to 4 carbon atoms, or an aryl group having 6 to 20 carbon atoms,

m is 1,

n + s is equal to or larger than 2, preferably 2 or 3,

n is equal to or larger than 0, and

s is equal to or larger than 0

and the ($R^1O$) group is present at an $\alpha$- or $\beta$-position to the carbonyl group, and a pair of the adjacent carbonyl groups have 2 to 6 carbon atoms in total.

Examples of the derivative are esters, amides, anhydrides, hydrates and salts of the saturated aliphatic polycarboxylic acid. Examples of the saturated aliphatic polycarboxylic acid are citric acid, malic acid, agaricic acid and the like. Examples of the ester are acetyl ester and mono- or distearyl ester of citric acid. Examples of the amide are N,N'-diethylamide, N,N'-dipropylamide, N-phenylamide, N-dodecylamide and N,N'-didodecylamide of citric acid and N-dodecylamide of malic acid.

(c) a compound of the formula:

X-Z-Y

wherein X is a group of the formula: [X'-CO]- in which X' is F, Cl, Br, I, OH, $OR^5$ or $-O-CO-R^5$ ($R^5$ is a hydrogen atom, an alkyl group or an aryl group), Y is a carboxyl group, an acid anhydride group, an acid amide group, an imide group, a carboxylate ester group or a hydroxyl group, and X and Y are covalently bonded through a hydrocarbon group Z.

Specific examples are chloroformylsuccinic anhydride, chloroethanoylsuccinic anhydride, trimellitic anhydride, acetic anhydride, terephthalic acid chloride and the like.

Among the compounds (a) to (c) having the functional groups in the molecule, the unsaturated dicarboxylic anhydride is particularly preferred.

An amount of the compound (a) to (c) having at least one functional group in the molecule to be used for modification is from 0.01 to 20 parts by weight, preferably from 0.1 to 10 parts by weight based on 100 parts by weight of the polyphenylene ether.

When the amount of this compound is less than 0.01 parts by weight, the thermoplastic resin composition of the present invention has insufficient mechanical properties. When this amount exceeds 20 parts by weight, the resin composition tends to be colored or have decreased flowability.

To react the polyphenylene ether and the modifier compound, there are a process comprising reacting them in a well known solvent in the presence or absence of a radical initiator and a process comprising effectively reacting them in the absence of a solvent at a temperature at which the polyphenylene ether is molten. Any process may be employed.

If necessary, an unmodified polyphenylene ether may be added to the modified polyphenylene ether to be contained in the thermoplastic resin composition according to the present invention.

The thermoplastic resin composition comprising (A) the polyphenylene ether which is modified with the compound having the functional group reactive with the amino group in the molecule and (B) the modified propylene polymer to which at least one monomer or monomer mixture selected from the specific groups is grafted has superior properties such as heat resistance, mechanical properties and appearance to a composition comprising the modified polyphenylene ether and the propylene polymer or a composition wherein an interface is formed by an intermolecular force between the modified polyphenylene ether and the styrene chains of the modified propylene polymer.

The function of the present invention may be achieved by synergistic effects of the reaction between the functional group of the modified polyphenylene ether and the amino group of the modified propylene polymer and the intermolecular force between the modified polyphenylene ether and the styrene chains of the modified propylene polymer and thereby a bonding force of the modified propylene polymer and the modified polyphenylene ether at the interface and the dispersibility of the modified polyphenylene ether in the thermoplastic resin composition according to the present invention are significantly improved.

According to the present invention, the desired thermoplastic resin composition is obtained when the ratio of the component (A) to the component (B) is in the specific range. A composition of the components (A) and (B) is 99 to 1 % by weight of the component (A) and 1 to 99 % by weight of the component (B).

When the amount of the component (A) is less than 1 % by weight, the resin composition has insufficient heat resistance. When it exceeds 99 % by weight, the processability and the chemical resistance of the resin composition are insufficient.

In the resin composition according to the present invention, preferably the component (A) forms a discontinuous phase while the component (B) forms a continuous phase. In such case, the resin composition is excellent in chemical resistance and moldability and the molded article of the composition has good appearance.

Preferably, the amounts of the components (A) and (B) are 80 to 1 % by weight and 20 to 99 % by weight respectively. More preferably, an amount of the component (A) is from 70 to 1 % by weight, while an amount of the component (B) is from 30 to 99 % by weight.

In the resin composition according to the present invention, it is possible to add the unmodified polyphenylene ether to the modified polyphenylene ether (A) and also to add the unmodified propylene polymer to the modified propylene polymer (B), if desired. In particular, the addition of the unmodified propylene polymer is preferred, since the elongation is improved. In such case, the modified propylene polymer and the unmodified propylene polymer are well compatible with each other, and the modified polyphenylene ether and the unmodified polyphenylene ether are well compatible with each other.

In this case, by the same reason as above, preferably the compatibilized polyphenylene ether part forms the discontinuous phase, while the compatibilized propylene polymer part forms the continuous phase.

When the unmodified propylene polymer is blended with the modified propylene polymer (B) in the thermoplastic resin composition according to the present invention, amounts of the components (A) and (B) and the unmodified propylene polymer are preferably 1 to 90 % by weight, 94 to 1 % by weight and 5 to 98 % by weight, respectively, more preferably, 1 to 80 % by weight, 94 to 10 % by weight and 10 to 89 % by weight, respectively.

In the resin composition according to the present invention, if desired, a rubber-like material (C) may be used to improve the impact resistance. Herein, the rubber-like material intends to mean a natural or synthetic polymer material which is elastic at room temperature.

Specific examples of the rubber-like material are natural rubber, butadiene polymer, butadiene-styrene copolymer including random, block and graft copolymers, their hydrogenated derivatives, isoprene polymer, chlorobutadiene polymer, butadiene-acrylonitrile copolymer, isobutylene polymer, isobutylene-butadiene copolymer, isobutylene-isoprene copolymer, acrylate copolymer, ethylene-α-olefin copolymer, styrene-isoprene copolymer or their hydrogenated derivatives, styrene-ethylene-butylene copolymer, styrene-butylene copolymer, styrene-ethylene-propylene copolymer, perfluororubber, fluororubber, chloroprene rubber, butyl rubber, silicone rubber, ethylene-α-olefin-non-conjugated diene copolymer, Thiokol rubber, polysulfide rubber, polyurethane rubber, polyether rubber (e.g. propylene oxide, etc.), epichlorohydrin rubber, polyester elastomer, polyamide elastomer, epoxy group-containing copolymer and the like.

Herein, the epoxy group-containing copolymer intends to mean a copolymer comprising an unsaturated epoxy compound and an ethylenically unsaturated compound.

An amount of the component (C) based on the sum of the components (A) and (B) is from 0 to 60 parts by weight per 100 parts by weight of the total weight of the components (A) and (B). When the amount of the component (C) exceeds 60 parts by weight, the heat resistance of the resin composition greatly deteriorated unpreferably.

In the thermoplastic resin composition according to the present invention, an inorganic filler may be optionally added to improve, in particular, stiffness and dimensional stability of the molded article.

As the inorganic filler, calcium carbonate, talc, clay, silica, magnesium carbonate, barium sulfate, titanium oxide, alumina, gypsum and the like are exemplified. Among them, talc and calcium carbonate are preferred.

The inorganic filler preferably has an average particle size of 0.05 to 10 µm.

When the particle size is less than 0.05 µm, the dimensional stability and stiffness of the molded article are not materially improved. When the particle size exceeds 10 µm, the surface gloss of the molded article is considerably deteriorated. As the inorganic filler, glass fibers may be used.

In addition to the above components, the thermoplastic resin composition according to the present invention may optionally contain a melt flow improver.

As the melt flow improver, any of known ones may be used. Preferably, white oil, liquid paraffin, low molecular weight hydrocarbon resin, low molecular weight polyolefin and the like are exemplified. Their modified products may be used. As the white oil, for example, one disclosed in Japanese Patent Kokai Publication No. 238051/1990 and the like are used.

The liquid paraffin is one prepared by distilling a crude oil under atmospheric or reduced pressure to remove unsaturated components, aromatics, sulfur compounds, etc.

As the low molecular weight hydrocarbon resin, one disclosed in Japanese Patent Kokai Publication No. 160858/1990 and the like are used.

The above exemplified melt flow improvers may be used independently or as a mixture of two or more of them.

To carry out the present invention, if desired, various additives such as an antioxidant, a heat stabilizer, a light stabilizer, a flame retardant, a lubricant, an antistatic agent, an inorganic or organic colorant, a rust preventive, a crosslinking agent, a foaming agent, a fluorescent agent, a surface smoothing agent, a surface gloss improver and the like can be added to the composition during the preparation of the composition or during the post-processing of the composition.

The flame retardant is explained further in detail. The flame retardant useful in the present invention includes a group of the compounds well known to those skilled in the art.

In general, among the flame retardants, is used a compound comprising an element which can impart flame retardancy to the composition such as bromine, chlorine, antimony, phosphorus and nitrogen as disclosed in Japanese Patent Kokai Publication No. 160856/1990. For example, a halogen-containing organic compound, antimony oxide, a mixture of antimony oxide and the halogen-containing compound, a mixture of antimony oxide and a phosphorus compound, a mixture of phosphorus and the phosphorus compound, a mixture of the phosphorus compound and a compound having a phosphorus-nitrogen bond, and a mixture containing two or more of such compounds are used.

There is no limitation on a process for preparing the thermoplastic resin composition according to the present invention, and any conventional process is used. For example, a process comprising mixing the components in the form of solutions, and evaporating a solvent or precipitating the components in a non-solvent liquid is effective. From the industrial view point, preferably the components are kneaded in molten states. For melt kneading, any kneading machine such as a single or twin screw extruder, various kneader and the like is used. In particular, a twin screw kneader is preferred.

For kneading, the components are preferably uniformly premixed using a tumbling mixer or a Henschel mixer. Optionally, the components are separately charged after metering to the kneading machine without premixing.

The kneaded resin composition is molded by a conventional molding process such as injection molding, extrusion molding and the like. The component may be dry blended during injection molding or extrusion molding without pre-kneading, kneaded during the melt processing step and then directly molded to produce the molded article.

In the present invention, there is no limitation on a sequence of kneading the components. The components (A), (B) and (C) are simultaneously kneaded, or the components (A) and (B) are kneaded first and then the component (C) is kneaded. Other kneading sequence may be employed.

Effects of the Invention

The modified propylene polymer according to the present invention is excellent in the coating properties, the antistatic property and the mechanical properties. Using such properties, it is used in the form of a molded article, a sheet, a tube, a film, fibers, a laminate or a coating material by injection molding or extrusion molding.

The thermoplastic resin composition according to the present invention is excellent in heat resistance, melt flowability, processability, chemical resistance, impact resistance, appearance and gloss. Using such good properties, it is used in the form of a molded article, a sheet, a tube, a film, a fiber, a laminate or a coating material by injection molding or extrusion molding.

In particular, the modified propylene polymer and the resin composition of the present invention is used for producing automobile parts including interior and exterior parts such as a bumper, a glove box, a console box, a braking oil reservoir, a radiator grill, a cooling fan, a lump housing, an air cleaner, an instrument panel, a fender, a door trim, a rear end trim, a door panel, a wheel covering, a side protector, an air intake, a garnish, a trunk lid, a bonnet, a sirocco fan, a roof and the like, and also machine parts which are required to be heat resistant. Further, the resin composition of the present invention is used for producing parts of two-wheelers such as a covering, a muffler covering and a leg shield. The modified propylene polymer is used for the production of a part which is required to have the strength and the antistatic property. In addition, the thermoplastic resin composition comprising the modified propylene polymer and the polyphenylene ether is used for the production of a part which is required to have the strength and the heat resistance.

EXAMPLES

The present invention will be illustrated by the following examples, which are only for explanation purpose and do not limit the scope of the present invention.

Hereinafter, the polyphenylene ether and the propylene polymer may be abbreviated as "PPE" and "PP", respectively in some cases.

(I) Physical property measurement of propylene polymers

Average molecular weight

The propylene polymers were all prepared in the laboratory.

A weight average molecular weight of a propylene polymer or a modified propylene polymer (which may be hereinafter referred to as "Mw") was measured by gel permeation chromatography (which may be hereinafter referred to as "GPC" method) according to a conventional method.

Styrene content

A styrene content in a modified propylene polymer was determined as follows:

Mixtures of a homopolymer of propylene and polystyrene were prepared at different ratios to obtain standard samples and an infrared spectroscopic (IR) calibration curve was generated using the standard samples. Then, the modified propylene polymer was analyzed by IR spectroscopy and its styrene content was read from the calibration curve.

Content of the amino group-containing monomer

A content of the amino group-containing monomer in the modified propylene polymer was determined by measuring a nitrogen content in the modified propylene polymer by an atomic absorption sepctrophotometry and converting the nitrogen content to a content of the amino group-containing monomer.

Content of the amino group-containing styrene monomer

A content of the amino group-containing styrene monomer was determined by the same manner as in the above case of the content of the styrene.

When the amino group-containing styrene monomer and the amino group-containing monomer were both grafted on the modified propylene polymer, a nitrogen content in the modified propylene polymer was

determined by an atomic absorption spectrophotometry and then, from such nitrogen content, the content of the amino group-containing styrene monomer measured by the IR spectroscopy was deducted to obtain a content of the amino group-containing monomer.

Flexural modulus

A flexural modulus of the propylene polymer or the modified propylene polymer was measured according to ASTM D790 with a molded article which was produced by injection molding the polymer using the IS 150E-V type injection molding machine (manufactured by Toshiba Machine Co., Ltd.) at a molding temperature of 250-230 °C and a mold cooling temperature of 70 °C.

Coating property

A coating property was measured as follows.

Preparation of a plate sample for a coating test:

The resin composition of the present invention was molded in the form of a plate sample of 150 mm in length, 90 mm in width and 2 mm in thickness using the above injection molding machine while controlling a resin temperature at 230 °C.

Coating test:

A surface of the above plate sample was cleaned in a vapor of 1,1,1-trichloroethane at 74 °C for 30 seconds and dried at room temperature. The cleaned surface was directly spray coated with a urethane coating (Flexene 101 manufactured by Nippon Beechemical Co., Ltd.) and baked in an oven kept at 120 °C for 30 minutes.

After kept standing the coated sample for 24 hours, the coating film on the sample was cut with a razor in a chessboard pattern having 100 blocks (10 x 10) each having a size of 2 mm square. Thereon, a piece of Cellotape (a trademark of Nichiban, an adhesive tape) was press adhered with fingers and, from one end of the adhesive tape, the tape was peeled off at a stroke. Then, a percentage of remaining blocks was measured.

Surface resistivity

An antistatic property of the modified propylene polymer was evaluated by measuring its surface resistivity.

The surface resistivity of a sample was measured with a sheet of 10 mm in length, 10 mm in width and 0.2 mm in thickness which was prepared by the above injection molding machine using an insulation resistance tester at a measuring temperature of 23 °C after 1 minute application of a voltage of 500 V.

(II) Physical property measurement of thermoplastic resin compositions

The measurement of the physical properties was carried out with a molded article which was prepared by kneading the composition using a twin screw extruder at a cylinder temperature of 260 to 330 °C and injection molding the composition using an injection molding machine (IS 150EV manufactured by Toshiba Machine Co., Ltd.) at a molding temperature of 260 to 330 °C and a mold temperature of 70 to 140 °C.

A deformation temperature under load (HDT) was measured according to JIS K 7207 and an Izod impact strength (at a thickness of 3.2 mm) was measured according to JIS K 7110.

A reduced viscosity ($\eta_{sp}$/c) was measured with a 0.5 g/dl solution in chloroform at 25 °C.

A melt flow index (MI) of the propylene polymer was measured according to JIS K 6758 at 230 °C under a load of 2.16 kg.

Appearance of the injection molded article was evaluated according to the following criteria:

O: The appearance is beautiful and few flow mark or little color tone change is observed.

X: Flow marks and color tone change are observed on the surface of the molded article.

Morphological observation of the injection molded article was carried out as follow:

The injection molded article was sliced with a microtome, etched with carbon tetrachloride and observed by a scanning electron microscope. The results were classified as follow:

A: The polyphenylene ether part (the modified PPE and the unmodified PPE) formed a discontinuous phase and the propylene polymer part (the modified PP and the unmodified PP) formed a continuous

phase.

B: The polyphenylene ether part formed a continuous phase and the propylene polymer part formed a discontinuous phase.

The flexural modulus was measured at a weld part and a non-weld part of the injection molded article according to ASTM D790.

A face impact strength was measured using a High Rate Impact Tester (RIT-8000 Type manufactured by Rheometrix Inc. USA). A plate test sample having a thickness of 3 mm was fixed with a 2 inch round holder, and an impact probe of 5/8 inch having a tip ball of 5/16 inch radius was used and pressed on the sample at 23 ° C at a rate of 1.5 m/sec. to evaluate the face impact strength, which was expressed in terms of an energy (joule) which was consumed till the sample was broken.

(III) Used materials for the thermoplastic resin compositions

(1) Modified polyphenylene ether, a component (A)

(i) To a polyphenylene ether having $\eta_{sp}/c$ of 0.35 (manufactured by Nippon Polyether Co., Ltd.) (100 parts by weight), maleic anhydride (6.1 parts by weight) and styrene (2.9 parts by weight) were compounded together with the radical initiator (Perbutyl PV (trade name) manufactured by Nippon Oil and Fat Co., Ltd.) and a stabilizer (Irganox 1010 (trade name) manufactured by Ciba Geigy) and mixed by a Henschel mixer. Then, the mixture was pelletized using a twin screw extruder (manufactured by Toshiba Machine Co., Ltd.) at a cylinder temperature of 265 ° C to obtain a modified polyphenylene ether, which will be referred to as "A-1".

(ii) To a polyphenylene ether having $\eta_{sp}/c$ of 0.4 (manufactured by Nippon Polyether Co., Ltd.) (100 parts by weight), maleic anhydride (8.1 parts by weight) and styrene (5 parts by weight) were compounded together with the radical initiator (Perbutyl PV) and the stabilizer (Irganox 1010) and mixed by a Henschel mixer. Then, the mixture was pelletized using the twin screw extruder (manufactured by Toshiba Machine Co., Ltd) at a cylinder temperature of 270 ° C to obtain a modified polyphenylene ether, which will be referred to as "A-2".

(2) Modified propylene polymer, a component (B)

(i) A homopolypropylene (MI = 4.9) (100 parts by weight) and p-aminostyrene (manufactured by Tokyo Kasei Co., Ltd.) (3.9 parts by weight) were charged together with a radical initiator (tert.-butyl peroxy-2-ethylhexanoate) and the stabilizer in a twin screw extruder and kneaded in a nitrogen atmosphere at a cylinder temperature of 270 ° C to obtain a modified propylene polymer, which will be referred to as "B-1".

(ii) In the same manner as in the preparation of B-1 but using aminomethylstyrene (2.3 parts by weight) and styrene (5.9 parts by weight) in place of p-aminostyrene (manufactured by Tokyo Kasei Co., Ltd.) (3.9 parts by weight), a modified propylene polymer was prepared. This modified propylene polymer will be referred to as "B-2".

(iii) A block polypropylene (MI = 6.2) (100 parts by weight), p-aminostyrene (manufactured by Tokyo Kasei Co., Ltd.) (12 parts by weight) and styrene (6 parts by weight) were charged together with the radical initiator (Perbutyl PV), a dispersant (Prulonick F68 (trade name) manufactured by Asahi Denka Co., Ltd.) and water in an autoclave and reacted in a nitrogen atmosphere at 97 ° C for about one hour to obtain a modified propylene polymer, which will be referred to as "B-3".

(iv) Pellets of a homopolypropylene (MI = 3.8) (100 parts by weight) as a propylene polymer, the styrene monomer (12 parts by weight), glycidyl methacrylate (1 part by weight) and diallylamine (14 parts by weight) were charged in an autoclave together with a dispersant (Metrose 90 SH-100 (trade name) manufactured by Shin-Etsu Chemical Co., Ltd.), a peroxide (Perbutyl PV) and water and reacted at 100 ° C for about one hour while bubbling nitrogen, followed by cooling to obtain a modified propylene polymer, which will be referred to as "B-4".

(v) In the same manner as in the preparation of B-4 but using no diallylamine, a modified propylene polymer was prepared. This modified propylene polymer will be referred to as "B-5".

(vi) Pellets of a block polypropylene (MI = 7.4) (100 parts by weight) as a propylene polymer, styrene (27 parts by weight), allylaniline (5 parts by weight) and diallylamine (4 parts by weight) were charged in an autoclave together with a dispersant (Prulonick F 68), a peroxide (1,1-bis(tert.-butylperoxy)-3,3,5-trimethylsiloxane) and water and reacted at 90 ° C for about one hour while bubbling nitrogen, followed by cooling to obtain a modified propylene polymer, which will be referred to as "B-6".

(3) Rubber-like material, a component (C)

C-1: An ethylene-propylene rubber modified with maleic anhydride and styrene
C-2: An ethylene-propylene-non-conjugated diene rubber, Esprene E 301 (a trade name of Sumitomo Chemical Co., Ltd.) ($ML_{1+4}$ 100 ° C = 55)
C-3: An ethylene-epoxy acrylate copolymer, Bondfast 2C (a trade name of Sumitomo Chemical Co., Ltd.)

Example 1

A raw material homopolypropylene (Mw = 12,600) (100 parts by weight), styrene (11 parts by weight) and diallylamine (28 parts by weight) were charged in an autoclave together with water (500 parts by weight), a dispersant (Metrose 90 SH-100 (trade name) manufactured by Shin'etsu Chemical Co., Ltd.) (1.6 parts by weight) and also a radical initiator (tert.-butyl peroxypivalate) (1.2 parts by weight) and reacted at 102 ° C for about one hour in a nitrogen atmosphere.

From the polymer obtained by this polymerization, a copolymer of ungrafted styrene and diallylamine which was produced together with the modified propylene polymer was extracted with methyl ethyl ketone. Then, the homopolymer of propylene was extracted with xylene and removed to obtain the modified propylene polymer. In this case, a graft efficiency was 83 %.

Hereinafter, this modified propylene polymer may be referred to as "P-1".

The Mw of the copolymer of ungrafted styrene and diallylamine which was extracted with methyl ethyl ketone was measured by the GPC method to measure a Mw of the graft chain. Then, an average graft chain number per one molecule of the modified propylene polymer was calculated from this Mw and those of the propylene polymer before and after modification. The results are shown in Table 1.

With the following modified propylene polymers, an average graft chain number was calculated in the same manner as above.

The physical properties of the modified propylene polymer obtained are shown in Table 2.

Fig. 1 shows IR spectra of the modified propylene polymer (A-1) and the raw material homopolypropylene. Figs. 2, 3 and 4 show IR spectra of polystyrene (cf. "Comprehensive Bibliography of Infrared Spectra" published by Sankyo Shuppan), the styrene monomer and the diallylamine monomer (cf. THE ALDRICH LIBRARY OF INFRARED SPECTRA).

From the IR spectrum, it is understood that the modified propylene polymer (A-1) contained no free monomers. As shown by the arrows in Fig. 1, the modified propylene polymer had IR absorptions at about 700, 755 and 890 $cm^{-1}$ which are not found in the IR spectrum of the homopolypropylene but were assigned to the graft copolymerized styrene and diallylamine.

Comparative Example 1

Physical properties of the homopolypropylene (Mw = 12,600) are shown in Table 2.

Example 2

A homopolypropylene (Mw = 18,000) (100 parts by weight), styrene (9 parts by weight), vinylimidazole (46 parts by weight) and glycidyl methacrylate (12 parts by weight) were charged in an autoclave together with water (400 parts by weight), a dispersant (Metrose 90 SH-100, a trade of Shin'etsu Chemical Co., Ltd.) (3.1 parts by weight) and a radical initiator (tert.-butyl peroxypivalate) (0.8 parts by weight) and reacted at 96 ° C for about one hour, and the polymer was recovered and dried under reduced pressure, followed by the same treatment as in Example 1 to obtain the modified propylene polymer. In this case, a graft efficiency was 72 %.

Hereinafter, this modified propylene polymer may be referred to as "P-2".

Comparative Example 2

The physical properties of the homopolypropylene (Mw = 18,000) are shown in Table 2.

Example 3

A random polypropylene (ethylene content of 2.1 % by weight, Mw = 45,100) (100 parts by weight),

allylaniline (7 parts by weight) and p-aminostyrene (9 parts by weight) were charged in a twin screw extruder together with a stabilizer (Irganox 1010, a trade name of Ciba Geigy) (0.1 parts by weight) and tert.-butyl peroxypivalate (1.2 parts by weight) and melt kneaded at a cylinder temperature of 230°C. The obtained polymer was treated in the same manner as in Example 1 to obtain a modified propylene polymer. In this case, a graft efficiency was 52 %.

Hereinafter, this modified propylene polymer may be referred to as "P-3".

The graft chain number and the like of the obtained modified propylene polymer are shown in Table 1, and its physical properties are shown in Table 2.

Comparative Example 3

The physical properties of the homopolypropylene (Mw = 45,100) are shown in Table 2.

Example 4

The modified propylene polymer P-2 obtained in Example 2 (75 parts by weight) and the homopolypropylene (Mw = 18,000) (25 parts by weight) were charged in a twin screw extruder together with a radical initiator (tert.-butyl peracetate) (0.4 parts by weight) and a stabilizer (Irganox 1010 (trade name) manufactured by Ciba Geigy) (0.3 parts by weight) and melt kneaded at a cylinder temperature of 230°C to obtain a modified propylene polymer composition.

The physical properties the obtained modified propylene polymer composition are shown in Table 2.

From the above Examples and Comparative Examples, it is understood that the modified propylene polymers of the present invention are excellent in the coating property, the antistatic property and the mechanical properties.

Examples 5-12 and Comparative Examples 4-12

Components were compounded and kneaded in a composition shown in Tables 3 to 6, and the physical properties were measured. The results are shown in Tables 3 to 6.

Table 1

| Sample No. | Wt. Av. molecular weight | Content of amino group-cont. monomer (wt. %) | Content of aminostyrene (wt. %) | Content of styrene (wt. %) | Wt. Av. Mw of graft chain | Graft chain number per molecule |
|---|---|---|---|---|---|---|
| P-1 | 14,500*1) | 4.2 | --- | 9.2 | 1200 | 1.6 |
| P-2 | 25,300*2) | 21.1 | --- | 3.1 | 1900 | 3.8 |
| p-3 | 48,200*3) | 2.7 | 5.3 | --- | 500 | 6.2 |

Note: *1) Mw of the raw material propylene polymer = 12,600.
*2) Mw of the raw material propylene polymer = 18,000.
*3) Mw of the raw material propylene polymer = 45,100.

Table 2

| Example No. | Composition (wt. %) | | Physical properties | | |
|---|---|---|---|---|---|
| | Modified propylene polymer | Propylene polymer | Flexural modulus ($kg/cm^2$) | Coating film residue rate (%) | Surface resistivity (Ohm) |
| 1 | 100 (P-1) | 0 | 9500 | 97 | $2 \times 10^{12}$ |
| C. 1 | 0 | 100*1) | 8600 | 57 | $8 \times 10^{14}$ |
| 2 | 100 (P-2) | 0 | 13600 | 90 | $5 \times 10^{12}$ |
| C. 2 | 0 | 100*2) | 10300 | 32 | $3 \times 10^{12}$ |
| 3 | 100 (P-3) | 0 | 8400 | 87 | $6 \times 10^{13}$ |
| C. 3 | 0 | 100*3) | 6200 | 45 | $4 \times 10^{15}$ |
| 4 | 75 (P-2) | 25*2) | 11800 | 78 | $2 \times 10^{13}$ |

Note: *1) Homopropylene polymer, Mw = 12,600.
*2) Homopropylene polymer, Mw = 18,000.
*3) Random propylene polymer, Mw = 45,100.

Table 3

| Example No. | Composition (parts by weight) | | | | | Physical properties | | | | | | |
|---|---|---|---|---|---|---|---|---|---|---|---|---|
| | Polyphenylene ether part | | Propylene polymer part | | Other | HDT(°C) Load: 4.6 $kg/cm^2$ | Tensile test | | Flexural modulus ($kg/cm^2$) | | Appearance | Morphology |
| | Comp. A Mod. PPE | Unmod. PPE*1 | Comp. B Mod. PP | Unmod. PP*2 | | | Stress at break ($kg/cm^2$) | Elongation (%) | Non-weld part | Weld part | | |
| 5 | A-1 (17) | --- | B-1 (25) | 58 | --- | 139 | 321 | 426 | 15800 | 12700 | O | A |
| C. 4 | --- | 17 | --- | 83 | --- | 101 | 37 | 120 | 12500 | 4700 | X | A |
| C. 5 | A-1 (17) | --- | --- | 83 | --- | 113 | 68 | 175 | 13000 | 6300 | O | A |
| C. 6 | --- | 17 | B-1 (25) | 58 | --- | 118 | 128 | 235 | 14100 | 5900 | O | A |
| 6 | A-1 (28) | --- | B-1 (36) | 38 | 5*3, 2*4 | 149 | 420 | 361 | 19700 | 18300 | O | A |
| 7 | A-1 (39) | --- | B-2 (43) | 13 | 5*5 | 161 | 477 | 585 | 21300 | 18500 | O | A |

Note: *1) Manufactured by Nippon Polyether Co., Ltd.; $\eta_{sp}/c = 0.35$.
*2) Homopolypropylene (MI = 4.9).
*3) Talc (average particle size of 2.9 μm, aspect ratio of 6)
*4) Triphenyl phosphate.
*5) Polystyrene (A trade name: Esbright 500 H manufactured by Nippon Polystyrene Co., Ltd.).

Table 4

| Example No. | Composition (parts by weight) | | | | | Physical properties | | | | | | |
|---|---|---|---|---|---|---|---|---|---|---|---|---|
| | Polyphenylene ether part | | Propylene polymer part | | Other | HDT(°C) Load: 4.6 kg/cm$^2$ | Tensile test | | Flexural modulus (kg/cm$^2$) | | Appearance | Morphology |
| | Comp. A Mod. PPE | Unmod. PPE*1 | Comp. B Mod. PP | Unmod. PP*2 | | | Stress at break (kg/cm$^2$) | Elongation (%) | Non-weld part | Weld part | | |
| 8 | A-2 (30) | --- | B-4 (30) | 40 | --- | 142 | 475 | 568 | 21500 | 18900 | O | A |
| C. 7 | --- | 30 | --- | 70 | --- | 115 | 360 | 129 | 16500 | 2900 | X | A |
| C. 8 | A-2 (30) | --- | --- | 70 | --- | 122 | 395 | 185 | 17900 | 4500 | O | A |
| C. 9 | --- | 30 | B-4 (30) | 40 | --- | 131 | 387 | 248 | 17100 | 6800 | X | A |
| C. 10 | A-2 (30) | --- | B-5*3(30) | 40 | --- | 136 | 413 | 335 | 19500 | 7500 | O | A |
| 9 | A-2 (30) | --- | B-4 (30) | 40 | 4*5, 2*5' | 140 | 410 | 478 | 24900 | 17800 | O | A |

Note: *1) Manufactured by Nippon Polyether Co., Ltd.; $\eta_{sp}/c$ = 0.4.
*2) Homopolypropylene (MI = 3.5).
*3) A modified propylene polymer containing no amino group.
*4) Calcium carbonate (average particle size of 2.8 μm).
*5) Glass fiber (average fiber diameter of 5.9 μm, average fiber length of 200 μm).

Table 5

| Example No. | Composition (parts by weight) | | | | |
|---|---|---|---|---|---|
| | Polyphenylene ether part | | Propylene polymer part | | Other |
| | Comp. A Mod. PPE | Unmod. PPE*1 | Comp. B Mod. PP | Unmod. PP | |
| 10 | A-1 (9) | --- | B-3 (18) | *2 (44) | C-1 (27) |
| 11 | A-2 (19) | --- | B-6 (32) | *3 (33) | C-2 (10), C-3 (6) |
| C. 11 | --- | 19 | --- | *3 (65) | C-2 (10), C-3 (6) |

Table 5 (continued)

| Example No. | Physical properties | | | | | | | | | |
|---|---|---|---|---|---|---|---|---|---|---|
| | HDT(°C) Load: 4.6 kg/cm$^2$ | Tensile test | | Flexural modulus (kg/cm$^2$) | | Izod impact strength (kg.cm/cm) | | Face impact strength (J) at 23°C | Appearance | Morphology |
| | | Stress at break (kg/cm$^2$) | Elongation (%) | Non-weld part | Weld part | -30°C | 23°C | | | |
| 10 | 118 | 263 | 613 | 8800 | 7600 | 11 | 37 | 77 | O | A |
| 11 | 129 | 318 | 185 | 8900 | 7500 | 17 | 38 | 62 | O | A |
| C. 11 | 107 | 220 | 72 | 7500 | 2400 | 5 | 11 | 8 | X | A |

Note: *1) Manufactured by Nippon Polyether Co. Ltd. $\eta_{sp}/c = 0.3$. *2) Homopolypropylene (MI = 4.9).
*3) Block polypropylene (MI = 7.4).

Table 6

| Example No. | Composition (parts by weight) | | | | Physical properties | | | | | | |
|---|---|---|---|---|---|---|---|---|---|---|---|
| | Polyphenylene ether part | | Propylene polymer part | | HDT(°C) Load: 4.6 $kg/cm^2$ | Tensile test | | Flexural modulus ($kg/cm^2$) | | Appearance | Morphology |
| | Comp. A Mod. PPE | Unmod. PPE | Comp. B Mod. PP | Unmod. PP | | Stress at break ($kg/cm^2$) | Elongation (%) | Non-weld part | Weld part | | |
| 12 | A-2 (75) | --- | B-4 (25) | --- | 179 | 790 | 29 | 30800 | 25700 | O | A |
| C. 12 | --- | *1 (75) | --- | *2 (25) | 158 | 610 | 19 | 26200 | 20700 | O | A |

Note: *1) Manufactured by Nippon Polyether Co. Ltd. $\eta_{sp}/c = 0.4$.
*2) Homopolypropylene (MI = 3.5).

## Claims

**1.** A modified propylene polymer which comprises a propylene polymer to which at least one monomer or monomer mixture selected from the following monomers and monomer mixtures (a) to (d) is grafted in an amount of 1 to 200 parts by weight per 100 parts by weight of said propylene polymer, and has the average graft chain number of 1 to 10 per one molecule of the propylene polymer, a weight average polymerization degree of the graft chains of 1 to 100 and an average molecular weight of 1000 to 500,000.

(a) an amino group-containing styrene monomer,

(b) a styrene monomer and an amino group-containing monomer in a weight ratio of 0.01:1 to 100:1,

(c) an amino group-containing styrene monomer and a styrene monomer in a weight ratio of 0.01:1 to 100:1,, and

(d) an amino group-containing styrene monomer and an amino group-containing monomer in a weight ratio of 0.01:1 to 100:1,

provided that said styrene monomer and said amino group-containing monomer are not an amino group-containing styrene monomer.

**2.** The modified propylene polymer according to claim 1, wherein said animo group-containing styrene monomer is a styrene monomer having a primary or secondary amino group in a molecule.

**3.** The modified propylene polymer according to claim 1, wherein said amino group-containing styrene monomer is at least one monomer selected from the group consisting of animostyrene and aminomethylstyrene.

**4.** The modified propylene polymer according to any one of claims 1, 2 and 3, wherein said amino group-containing styrene monomer is a compound of the formula:

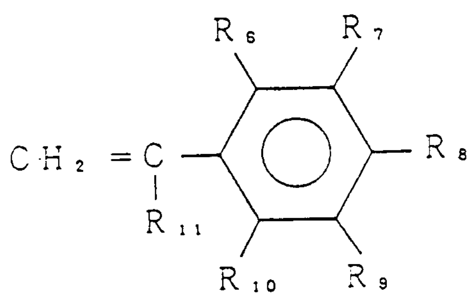

wherein $R_6$, $R_7$, $R_8$, $R_9$ and $R_{10}$ are the same or different and each a hydrogen atom, a halogen atom, a hydrocarbon group, a substituted hydrocarbon group, a hydrocarbonoxy group or a substituted hydrocarbonoxy group, and $R_{11}$ is a hydrogen atom or a lower alkyl group having 1 to 4 carbon atoms.

**5.** The modified propylene polymer according to any one of claims 1, 2 and 3, wherein said styrene monomer is at least one compound selected from the group consisting of styrene, 2,4-dichlorostyrene, p-methoxystyrene, p-methylstyrene, p-phenylstyrene, p-divinylbenzene, p-(chloromethoxy)-styrene, $\alpha$-methylstyrene, o-methyl-$\alpha$-methylstyrene, m-methyl-$\alpha$-methylstyrene, p-methyl-$\alpha$-methylstyrene and p-methoxy-$\alpha$-methylstyrene.

**6.** The modified propylene polymer according to any one of claims 1 to 5, wherein said amino group-containing monomer is a monomer having a primary or secondary amino group and a carbon-carbon double or triple bond in a molecule.

**7.** The modified propylene polymer according to any one of claims 1 to 5, wherein said amino group-containing monomer is at least one compound selected from the group consisting of allylamine, diallylamine, vinylimidazole, allylaniline, acrylamide, methacrylamide and N-phenylmethacrylamide.

**8.** A thermoplastic resin composition comprising a polyphenylene ether comprising (A) 99 to 1 % by weight of a polyphenylene ether which is modified with a compound having a functional group reactive with an amino group in a molecule and (B) 1 to 99 % by weight of the modified propylene polymer claimed in claim 1.

**9.** The thermoplastic resin composition according to claim 8, wherein said animo group-containing styrene monomer is a styrene monomer having a primary or secondary amino group in a molecule.

**10.** The thermoplastic resin composition according to claim 8, wherein said amino group-containing styrene monomer is at least one monomer selected from the group consisting of animostyrene and aminomethylstyrene.

**11.** The modified propylene polymer according to any one of claims 8, 9 and 10, wherein said styrene monomer is a compound of the formula:

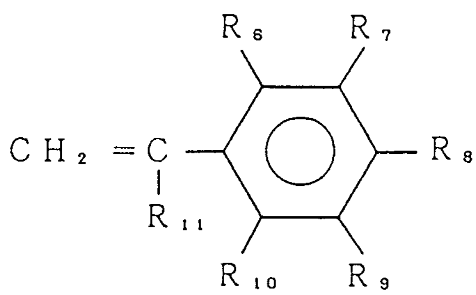

wherein $R_6$, $R_7$, $R_8$, $R_9$ and $R_{10}$ are the same or different and each a hydrogen atom, a halogen atom, a hydrocarbon group, a substituted hydrocarbon group, a hydrocarbonoxy group or a substituted hydrocarbonoxy group, and $R_{11}$ is a hydrogen atom or a lower alkyl group having 1 to 4 carbon atoms.

**12.** The thermoplastic resin composition according to any one of claims 8, 9 and 10, wherein said styrene monomer is at least one compound selected from the group consisting of styrene, 2,4-dichlorostyrene, p-methoxystyrene, p-methylstyrene, p-phenylstyrene, p-divinylbenzene, p-(chloromethoxy)-styrene, α-methylstyrene, o-methyl-α-methylstyrene, m-methyl-α-methylstyrene, p-methyl-α-methylstyrene and p-methoxy-α-methylstyrene.

**13.** The thermoplastic resin composition according to any one of claims 8 to 12, wherein said amino group-containing monomer is a monomer having a primary or secondary amino group and a carbon-carbon double or triple bond in a molecule.

**14.** The thermoplastic resin composition according to any one of claims 8 to 12, wherein said amino group-containing monomer is at least one compound selected from the group consisting of allylamine, diallylamine, vinylimidazole, allylaniline, acrylamide, methacrylamide and N-phenylmethacrylamide.

**15.** The thermoplastic resin composition according to any one of claims 8 to 14, wherein said compound having a functional group reactive with an amino group in a molecule is a compound having, in a molecule, at least one group selected from (i) a carbon-carbon double bond and a carbon-carbon triple bond and at least one group selected from (ii) a carboxyl group, an acid anhydride group, an acid amide group, an imide group, an epoxy group, a carboxylate group, an isocyanate group, a methylol group, a group having an oxazoline ring and a hydroxyl group.

**16.** The thermoplastic resin composition according to any one of claims 8 to 14, wherein said compound having a functional group reactive with an amino group in a molecule is a compound of the formula:

$(R^1O)_mR(COOR^2)_n(CONR^3R^4)_s$

wherein

R is an alkyl group having 2 to 20 carbon atoms, preferably 2 to 10 carbon atoms,

$R^1$ is a hydrogen atom, an alkyl group, an aryl group, an acyl group or a carbonyldioxy group having 1 to 10 carbon atoms, preferably 1 to 6 carbon atoms, more preferably 1 to 4 carbon atoms, in particular a hydrogen atom,

$R^2$ is a hydrogen atom, an alkyl group or an aryl group having 1 to 20 carbon atoms, preferably 1 to 10 carbon atoms,

$R^3$ and $R^4$ are each a hydrogen atom, an alkyl group or an aryl group having 1 to 10 carbon atoms, preferably 1 to 6 carbon atoms, more preferably 1 to 4 carbon atoms,

m is 1,

n + s is equal to or larger than 2, preferably 2 or 3,

n is equal to or larger than 0, and

s is equal to or larger than 0

and the ($R^1O$) group is located at an α- or β-position to the carbonyl group, and a pair of the adjacent

carbonyl groups have 2 to 6 carbon atoms in total.

**17.** The thermoplastic resin composition according to any one of claims 8 to 14, wherein said compound having a functional group reactive with an amino group in a molecule is a compound of the formula:

X-Z-Y

wherein X is a group of the formula: [X'-CO]- in which X' is Cl, Br, I, OH, $OR^5$ or $-O-CO-R^5$ ($R^5$ is a hydrogen atom, an alkyl group or an aryl group), Y is a carboxylic acid group, an acid anhydride group, an acid amide group, an imide group, a carboxylate ester group or a hydroxyl group, and X and Y are covalently bonded through a hydrocarbon group Z.

Fig.1 IR Spectrum of propylene ploymers
(Solid line: modified polypropylene
Broken line: homopolypropylene)

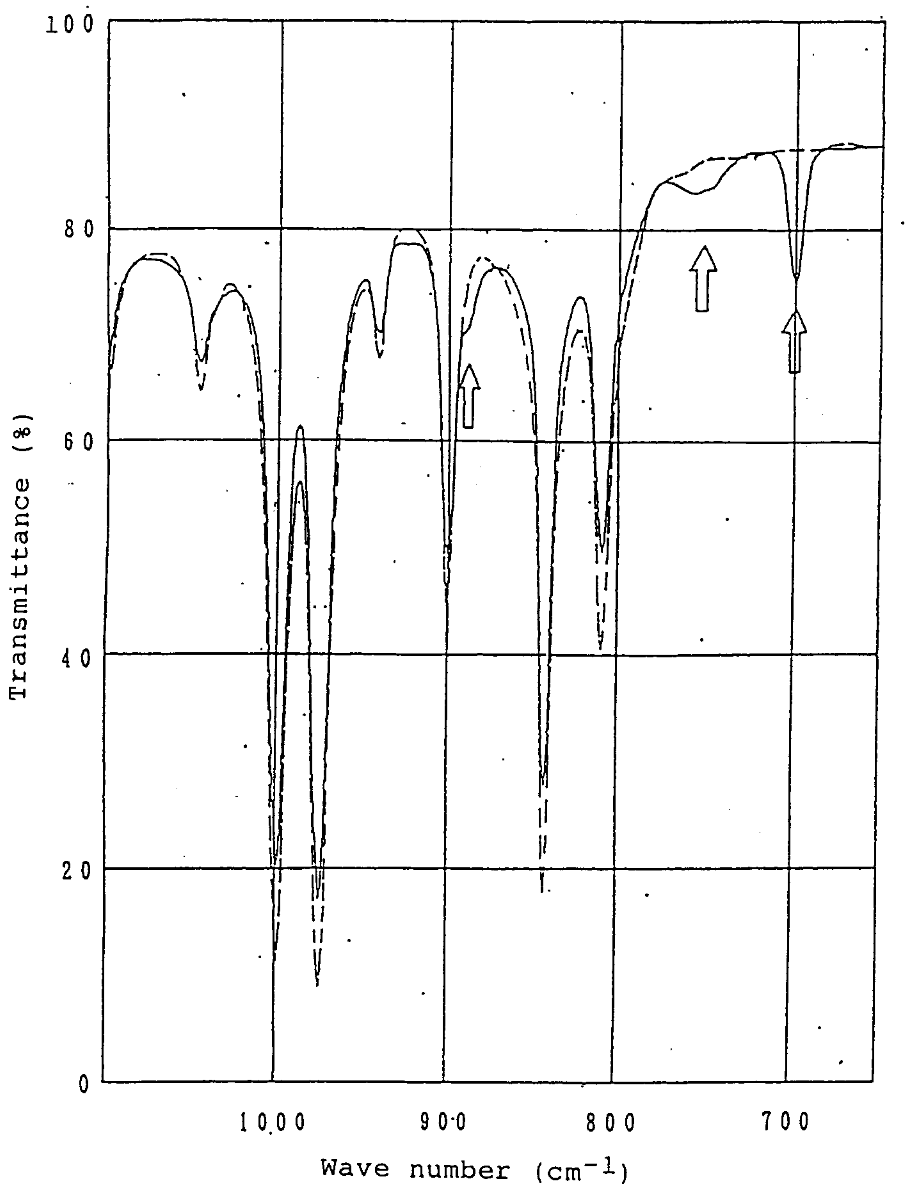

Fig.2 IR Spectrum of polystyrene

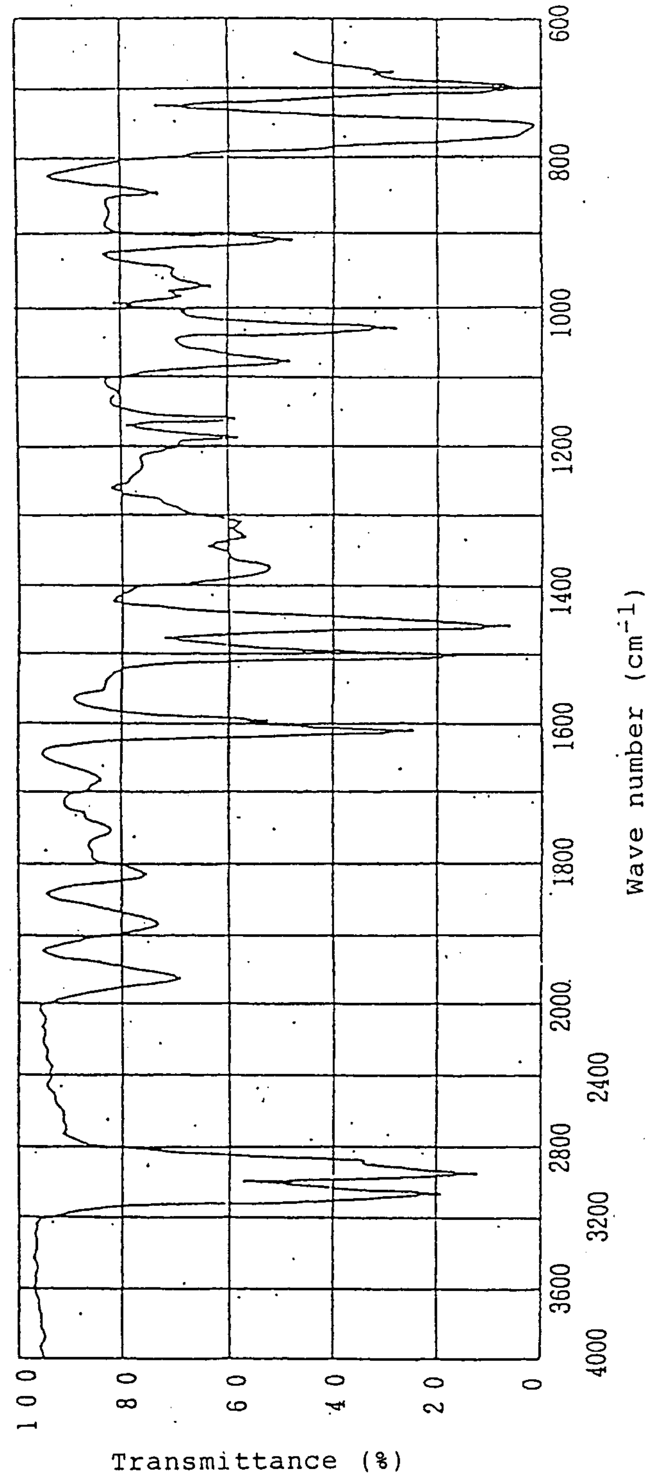

Fig.3 IR Spectrum of styrene

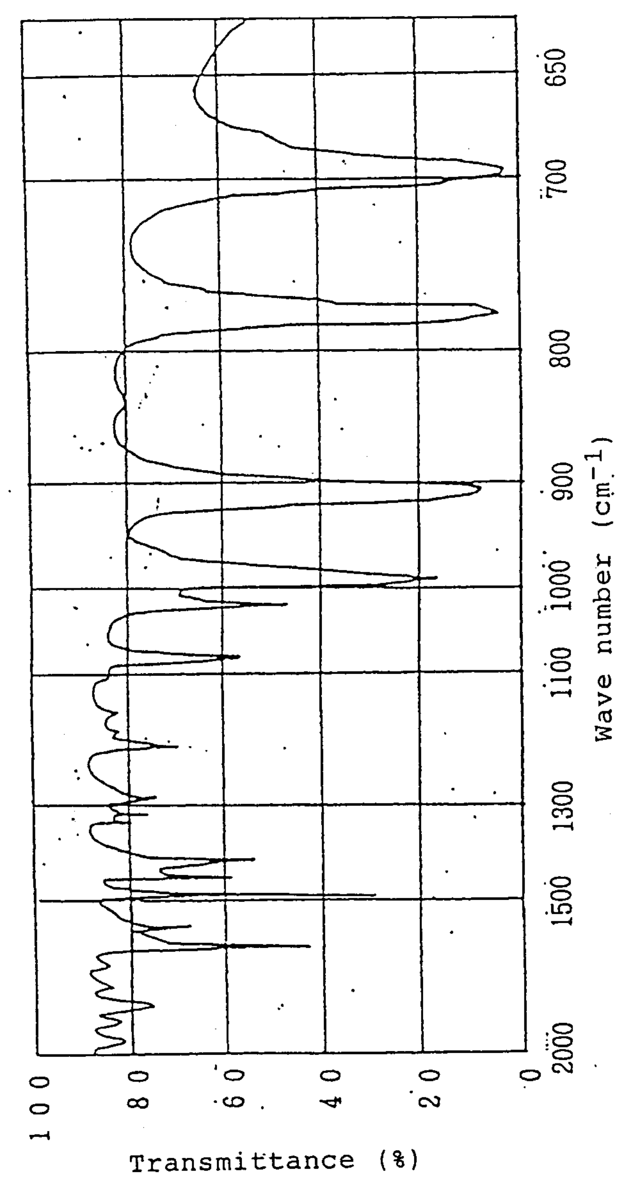

Fig.4 IR Spectrum of diallylamine

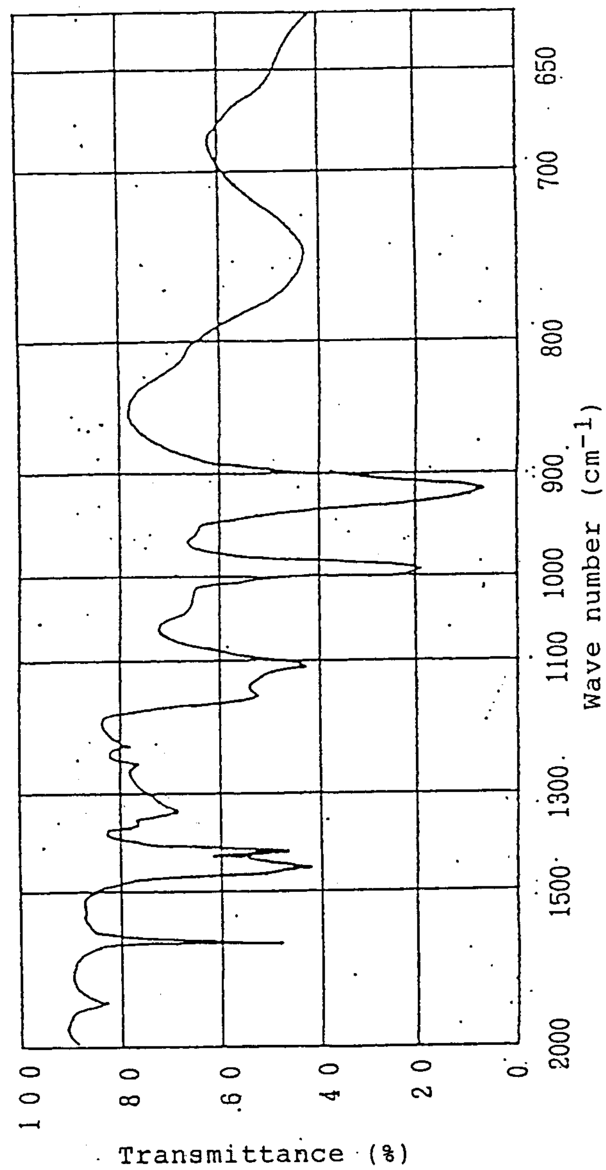

# INTERNATIONAL SEARCH REPORT

International Application No PCT/JP91/01490

**I. CLASSIFICATION OF SUBJECT MATTER** (if several classification symbols apply, indicate all) [6]

According to International Patent Classification (IPC) or to both National Classification and IPC

Int. $Cl^5$ C08F255/02, C08L51/06, C08L51/08, C08G81/02

**II. FIELDS SEARCHED**

Minimum Documentation Searched [7]

| Classification System | Classification Symbols |
|---|---|
| IPC | C08F255/02, C08L51/06, C08L51/08, C08G81/02 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 02-173137 (Nippon G E Plastics K.K.), July 4, 1990 (04. 07. 90), 3rd line from the bottom, lower left column to line 8, lower right column, page 2, 3rd line from the bottom, lower right column, page 3 to line 15, page 4, lines 6 to 20, upper left column, page 5 (Family: none) | 1-17 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 20, 1992 (20. 01. 92) | February 18, 1992 (18. 02. 92) |
| **International Searching Authority** | **Signature of Authorized Officer** |
| Japanese Patent Office | |